Europäisches Patentamt

European Patent Office

Office européen des brevets

(19)

(11) Publication number: **0 120 547**
A1

(12) # EUROPEAN PATENT APPLICATION

(21) Application number: 84200459.0

(22) Date of filing: 28.03.84

(51) Int. Cl.³: **B 01 D 53/26**
**F 04 B 39/16**

(30) Priority: 28.03.83 NL 8301084

(43) Date of publication of application:
03.10.84 Bulletin 84/40

(84) Designated Contracting States:
BE DE FR GB NL SE

(71) Applicant: GRASSO'S KONINKLIJKE
MACHINEFABRIEKEN N.V.
Parallelweg 27
NL-5223 AL 's-Hertogenbosch(NL)

(72) Inventor: Jantzen, Hans Henrik
Maasdijk 90
NL-5317 KS Nederhemert(NL)

(74) Representative: van der Beek, George Frans et al,
Nederlandsch Octrooibureau Johan de Wittlaan 15 P.O.
Box 29720
NL-2502 LS The Haque(NL)

(54) Apparatus for drying pressurized air.

(57) Apparatus for drying pressurized air comprising a first heat exchanger (5, 9, 10) in which supplied wet air (8) is cooled indirectly by means of cooled dried air, and a second heat exchanger in which the wet pressurized air is cooled further to a desired temperature and fed to the first heat exchanger as cooled dried air and therefrom to the consumer (17), in which both of the heat exchangers are arranged above each other in a common housing (1), the second heat exchanger beneath the first heat exchanger, whereby in the space between the first heat exchanger and the second heat exchanger, which is preferably carried out as an icewaterbath additional tubes (13) or the like extend through which also a cold medium is passed.

EP 0 120 547 A1

Croydon Printing Company Ltd.

1

Apparatus for drying pressurized air.

-------------------------------------------

The invention relates to an apparatus for drying pressurized air comprising a first heat exchanger in which supplied wet air is cooled indirectly by means of cooled dried air and a second heat exchanger carried out as a cold-accumulator, such as an icewaterbath, in which the wet pressurized air by direct contact is cooled in an icewaterbath to a temperature of about $0^{o}C$, and is supplied to the first heat exchanger and then to a consumer, whereby both heat exchangers above each other are arranged within a common housing with the cold-accumulator below the first heat exchanger, through which cold-accumulator tubes or the like extend through which a cold medium is fed from a cooling plant at the outer surfaces of which tubes ice may be formed.

Such an apparatus is known from European patent publication 0 045 101 of applicant, in which as cold-accumulator an icewaterbath is used.

An icewaterbath is in fact no more than a container filled with water, through which tubes extend.

On the tubes a layer of ice is formed, so that the water, through which the pressurized air is passed, has also a temperature of about $0^{o}C$.

It is known, that more water vapour can be removed from pressurized air by cooling the pressurized air to a lower temperature, since the density of water vapour decreases at decreasing temperature.

According to the Handbooks the density of water vapour at about $35^{o}C$, is 39.63 $gr/m^3$ and at about $0^{o}C$ 4.85 $gr/m^3$.

When the pressurized air is supplied to the drying apparatus with a temperature of about + $35^{o}C$, in the icewaterbath per $m^3$ 34.78 gram water vapour is removed and remains in the icewaterbath as water.

When there is a small demand for pressurized air, for instance in a work break, the cooling installation works until a certain ice thickness is formed on the tubes, after which either the compressor is switched off automatically or a by-pass-line is opened. The water remains then at a temperature of about $0^{\circ}C$. Of course, the first method is preferred above the second method as to energy consumption.

When again pressurized air is consumed by a consumer, all ice firstly melts until the temperature of the water becomes too high and the compressor of the cooling installation is switched on again, or the bypass-line is switched off.

This way of drying pressurized air is very economic, since in this way with simple and cheap means the pressurized air is dried very well, while the removed water vapour remains without more in the icewaterbath.

In certain cases it is desired to remove still more water vapour from the pressurized air.

This can be reached in a simple way, in that in the space within the housing above the cold-accumulator and below the first heat exchanger additional tubes or the like extend, through which also a cold medium is passed.

By the presence of this third heat exchanger the pressurized air of about $0^{\circ}C$ rising from the cold-accumulator such as the icewaterbath it cooled to for instance $-4^{\circ}C$, whereby a density belongs of 3.25 $gr/m^3$, that means again 1.65 $gr/m^3$ water vapour is removed. This is a relatively small amount, but nevertheless effective. Moreover, this costs hardly more energy, while the melting ice can fall back into the icewaterbath.

An additional advantage is, that at strong changes in the air consumption, which can occur when a relatively large vessel for pressurized air is arranged between the compressor and the drying apparatus, water drops, which can be sucked by the pressurized air in very small quantities, immediately will freeze upon the third heat exchanger.

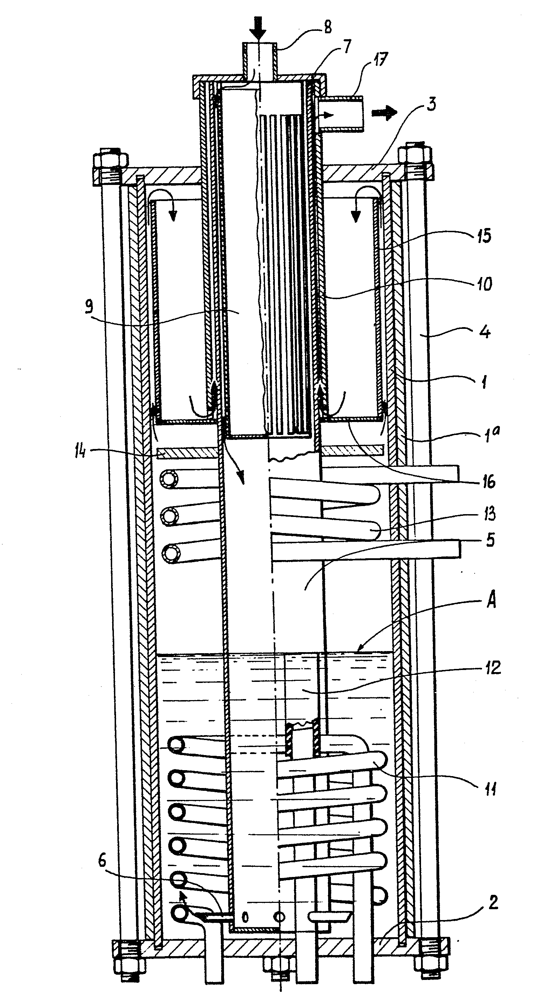

Hereafter, the invention will be explained by reference of the drawing, which drawing shows a longitudinal sectional view of the apparatus according to the invention, in which the internal of the housing in the left hand-half is shown as a sectional view and in the right-hand half partly as view.

The cylindrical wall of the housing is referred by 1. At the lower end the housing is closed by a cover 2 and at the upper end by a cover 3, which covers 2 and 3 are connected to each other by draw bolts 4. The wall 1 and the covers 2 and 3 are insulated against heat. The insulation of the wall 1 is referred by 1a. In the centre of the housing a vertical tube 5 extends throughout the cover 3. The tube 5 terminates at a short distance from the cover 2 and/or is provided there with outlet openings 6. The tube 5 is closed at the upper end by a cover 7, having therein an inlet 8 for supplying the pressurized air to be dried. Said pressurized air originates from a known apparatus for the production of pressurized air. Said pressurized air may be used for all kinds of purposes, but therefrom first the water vapour should be removed as much as possible.

At the upper portion of the tube 5 at the inner side a concentrical tube 9 is arranged and at the outer side a concentrical tube 10. The tube 5 and/or the tube 9 and/or the tube 10 is provided with means known per se for improving the heat tranfer. Such means may consist of ribs, ondulations or the like.

Around the lower portion of the tube 5 a cooling coil 11 is arranged, the terminals of which extend through the bottom 2 to a conventional cooling installation not shown. Said cooling installation is provided in a known

4

way with a.o. a driving motor and a compressor. As cold-medium for said cooling installation freon or ammonia is used.

The housing is filled with water by approximately one third of the height. Thus, said water surrounds the tube and is within the tube 5 at a height referred by A. In a known way there may be an overflow tube 12 extending outwardly through the bottom 2 to a steam trap not shown for preventing blowing empty the apparatus.

A further cooling coil 13 is connected to the same cooling apparatus and is present in the space above the level A of the water. This space is closed at the upper side by a rather massive plate 14.

In the upper part of the apparatus yet a tube 15 is provided within the wall 1. Said tube 15 is closed at its underside by a bottom 16, extending up to the tube 5. The tube 10 extends to the bottom 16 at some distance from said bottom. The space between the tubes 10 and 15 can eventually be filled up with a filling mass known per se and for instance consisting of metal chips.

The discharge stub for the dried air is indicated by 17.

The direction of movement of the air to be dried and dried air is indicated in the drawing by arrows. The wet air enters through the inlet stub 8 and advances downwards in the space between the tubes 5 and 9 along the inner wall of the tube 5 up to the lower end of the tube 5, where the air enters into the icewaterbath through the openings 6. Then, the air rises upwards from the icewaterbath and enters the annular space between the wall 1 and the tube 15. In this space the tubes 13 provide for a further cooling from $0^{\circ}C$ to about $-4^{\circ}C$. This concentrical space is left at the upper end, whereafter the air advances downwards between the tubes 15 and 10 through the eventually present filling mass and rises upwards again between the tubes 10 and 5 and finally leaves the apparatus through the discharge stub 17.

The tubes 5, 9 and 10 constitute the first heat exchanger, the icewaterbath the second heat exchanger and the tubes 13 with the plate 14 the third heat exchanger. It will be clear, that in the first heat exchanger 5, 9, 10 the wet air entering through the stub 8 ic cooled by the air, originating from the second and third heat exchanger.

The icewaterbath forms a so-called ice-accumulator, being used a.o. in the diary industry. At the outer surface of the tubes 11 ice is formed by feeding freon or ammonia through the tubes 11. By the presence of the ice the water of the icewaterbath will always have a temperature of nearly $0^{\circ}C$. When the ice obtains a certain thickness, the compressor of the cooling installation stalls or a bypass-line is set in operation. Then the ice can melt while the bath keeps always the temperature of approximately $0^{\circ}C$ yet. When all of the ice is melted, the compressor is switched on again or the bypass-line is switched off. All this may be obtained by usual control means known per se.

Also upon the tubes 13 ice is formed, so that the air is further cooled from about $0^{\circ}C$ and still somewhat water vapour is removed from the pressurized air. When it is assumed that the wet pressurized air enters with a temperature of $+35^{\circ}C$, then the density of the water vapour is 39.63 $gr/m^3$. In the icewaterbath a further cooling takes place to $0^{\circ}C$, whereby a density of 4.85 belongs. The condensated water is taken up in the icewaterbath. By the presence of the tubes 13 and the rather massive plate 14 a further cooling takes place to about $-4^{\circ}C$, so that still somewhat water vapour is removed, which after melting of the ice layer will fall in the icewaterbath. The density is then 3.25 $gr/m^3$.

6

Generally the discharge stub 17 is connected to a storage vessel for pressurized air. When pressurized air is necessary, first the storage vessel is used. When still more pressurized air is required, the pressurized air is fed through the inlet stub 8 and dried by the three heat exchangers. When at said moment the cooling installation does not operate, it remains out of the operation until all of the ice is melted. Only then the cooling installation is activated again.

Although an icewaterbath is most suitable as cold-accumulator, it is possible to use other kind of cold-accumulators. In that case it is not necessary to start with a temperature of $0^{o}C$.

Claims

7

C L A I M S

1. Apparatus for drying pressurized air comprising a first heat exchanger in which supplied wet air is cooled indirectly by means of cooled dried air and a second heat exchanger carried out as a cold-accumulator, such as an icewaterbath, in which the wet pressurized air by direct contact is cooled, in an icewaterbath to a temperature of about $0^{o}C$, and is supplied to the first heat exchanger and then to a consumer, whereby both heat exchangers above each other are arranged within a common housing with the cold-accumulator below the first heat exchanger, through which cold-accumulator tubes or the like extend through which a cold medium is fed from a cooling plant at the outer surfaces of which tubes ice may be formed, c h a r a c t e r i z e d in that in the space within the housing above the cold-accumulator and below the first heat exchanger additional tubes or the like extend through which also a cold medium is passed.

2. Apparatus according to claim 1, c h a r a c - t e r i z e d in that below the bottom of the first heat exchanger a cold-accumulating plate is arranged.

- - - - - - - - -

0120547

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-1 027 990 (CHICAGO BRIDGE & IRON COMP.) | | B 01 D 53/26 <br> F 04 B 39/16 |
| A | US-A-3 963 466 (W.M. HYNES) | | |
| A | US-A-4 242 110 (W.M. HYNES) | | |

--- 

|  |  |  | TECHNICAL FIELDS SEARCHED (Int. Cl. 3) |
|---|---|---|---|
|  |  |  | B 01 D 53/00 <br> F 04 B 39/00 |

The present search report has been drawn up for all claims

| Place of search | Date of completion of the search | Examiner |
|---|---|---|
| THE HAGUE | 03-07-1984 | BOGAERTS M.L.M. |